Europäisches Patentamt

European Patent Office

Office européen des brevets

(11) Publication number: **0 092 624**
**B1**

(12) **EUROPEAN PATENT SPECIFICATION**

(45) Date of publication of patent specification: **11.10.89**

(21) Application number: **82306945.5**

(22) Date of filing: **24.12.82**

(51) Int. Cl.⁴: **C 08 F 8/14,** C 08 G 18/62, C 09 D 3/81, C 09 D 3/72

(54) Coating composition and hydroxy acrylic copolymer precursor therefor.

(30) Priority: **28.12.81 US 334683**
**28.12.81 US 334684**

(43) Date of publication of application:
**02.11.83 Bulletin 83/44**

(45) Publication of the grant of the patent:
**11.10.89 Bulletin 89/41**

(84) Designated Contracting States:
**DE FR GB**

(56) References cited:
**DE-A-2 011 053**
**DE-A-2 014 861**

(73) Proprietor: **E.I. DU PONT DE NEMOURS AND COMPANY**
**1007 Market Street**
**Wilmington Delaware 19898 (US)**

(72) Inventor: **Chattha, Mohinder Singh**
**33466 Vargo**
**Livonia Michigan 48152 (US)**
Inventor: **Theodore, Ares Nicholas**
**34974 Valley Forge Dr.**
**Farmington Hills Michigan 48018 (US)**

(74) Representative: **Woodcraft, David Charles et al**
**BROOKES & MARTIN High Holborn House 52/54**
**High Holborn**
**London, WC1V 6SE (GB)**

The file contains technical information submitted after the application was filed and not included in this specification

Courier Press, Leamington Spa, England.

## Description

This invention relates to coating compositions and hydroxy acrylic copolymer precursors therefor.

Because of increasingly strict solvent emission regulations in recent years, low solvent emission paints have become very desirable. A number of high solids paint compositions have been proposed to meet these low solvent emission requirements. However, many of the compositions are deficient because of difficulty in application, slow curing rates, lack of flexibility, poor durability and low solvent and water resistance.

U.S. Patent 3,622,651 discloses a polymer useful in thermosetting coating compositions which comprises a backbone composed of units derived from (a) monoethylenically unsaturated monomers, (b) ethylenically unsaturated hydroxyalkyl esters, and (c) esterification products of the hydroxyalkyl esters (b), a dicarboxylic acid anhydride and a glycidyl ester. The compositions are formed by first forming the esterification product (c) and then copolymerising (a), (b) and (c), or by copolymerising all the reactants simultaneously. Whichever route is chosen, because of these successive polymerisation reactions, the composition comprises diverse macromolecules.

The thermosetting coating composition of this invention comprises:—

(A) a modified hydroxy acrylic copolymer which is the stepwise reaction product of:

(i) a copolymer bearing pendant hydroxyl groups and having a number average molecular weight ($M_n$) of from 1000 to 5000, the copolymer being prepared from between 5 and 40 weight percent of a monoethylenically unsaturated hydroxyl alkyl ester having the formula $CH_2=CR_1—COOR_2$ wherein $R_1$ is H or an alkyl group and $R_2$ is a hydroxy alkyl group and (b) from 95 to 60 weight percent of other monoethylenically unsaturated monomers;

(ii) dicarboxylic acid anhydride comprising at least 50 percent by weight of an alkyl hexahydrophthalic anhydride, wherein (i) and (ii) are reacted in an amount sufficient to esterify from 30 to 100 percent of the hydroxyl groups of the copolymer, thereby generating pendant carboxyl groups; and

(iii) a monoepoxide functional monomer comprising at least 90 percent by weight $C_2—C_{10}$ monoepoxide functional monomers, wherein the monomer is reacted with the pendant carboxyl groups of the polymer reaction product of (i) and (ii) so as to provide at least 1.0 equivalent of epoxide groups per equivalent of the pendant carboxyl groups generate pendant hydroxyl groups;

(B) an amine-aldehyde or polyisocyanate crosslinking agent;

(C) 0—50 weight percent based on the total weight of (A), (B), (C) and (D) of a hydroxy functional additive having a number average molecular weight ($\overline{M}_n$) of from 150 to 6000, preferably 500—2500; and

(D) solvent.

The amine-aldehyde crosslinking agent is included in the composition in an amount sufficient to provide at least 0.60, preferably from 0.75 to 3.75, equivalents of nitrogen crosslinking functionality for each equivalent of hydroxy functionality included in the composition either as a hydroxyl group on the modified hydroxy acrylic copolymer or as a hydroxyl group on the hydroxy functional additive.

The polyisocyanate crosslinking agent is included in an amount sufficient to provide 0.5 to 1.6 reactive isocyanate groups for each equivalent of hydroxy functionality included in the composition as an hydroxyl group on either the said copolymer or said additive.

The composition preferably contains at least 60% by weight and preferably at least 70% by weight of non-volatile solids. In addition, the coating composition of this invention may include additives such as catalysts, antioxidants, U.V. absorbers, flow control or wetting agents, antistatic agents, pigments and plasticizers. The compositions of this invention are also compatible with non-aqueous dispersions (NAD's), which are generally used as flow control additives.

The invention is also directed to the modified hydroxy acrylic copolymer defined at (A) above.

The coating compositions of this invention provide a system which is particularly suitable for those applications requiring a coating having high gloss, hardness, adhesion and high solvent and water resistance as well as superior impact strength. The desirable characteristics of the coating composition of this invention, in particular the enhanced flexibility and impact strength as well as weatherability are believed to result respectively from (1) the lengthening of the hydroxy pendant groups and (2) the steric hinderance to hydrolysis afforded the ester groups of the modified copolymer by the alkyl group of the anhydride. However, while this theory has been advanced to explain the enhanced flexibility and excellent durability of this coating composition, neither its validity nor its understanding is necessary for the practice of the invention.

Each of the components of the coating composition, the amounts of each of the components required to achieve the desired results of the invention and a method for applying the composition are described hereinafter in greater detail.

## Modified hydroxy acrylic polymer

A principal material in the coating composition of this invention is a modified hydroxy acrylic copolymer, wherein a copolymer bearing pendant hydroxyl groups, which may be prepared by conventional free radical induced polymerisation of suitable unsaturated monomers, is modified by successive reactions, which lengthen the pendant hydroxyl group. The term "copolymer" as used herein refers to the unmodified copolymer, i.e., a copolymer of two or more different monomers at least one of which contains pendant hydroxy groups, which becomes a "modified copolymer" when the pendant hydroxy functional groups have been lengthened.

The copolymers used in the coating composition of this invention have a number average molecular weight ($\overline{M}_n$) of from 1000 to 5000, preferably 1500—3500. The copolymers generally have a glass transition temperature (Tg) of between 0°C and 50°C, preferably between 5°C and 40°C. The monomers used to prepare the copolymer include from 5 to 40 weight percent of one or more monoethylenically unsaturated monomers bearing hydroxyl functionality.

The monoethylenically unsaturated hydroxy functional monomers useful in preparation of the copolymer and providing the hydroxy functionality to the copolymer may be selected from a long list of hydroxy functional monomers. Preferably, however, the hydroxy functional monomers are acrylates and may be selected from the group consisting of, but not limited to the following esters of acrylic or methacrylic acids and aliphatic alcohols: 2 - hydroxyethyl acrylate; 3 - chloro - 2 - hydroxypropyl acrylate; 2 - hydroxy - 1 - methylethyl acrylate; 2 - hydroxypropyl acrylate; 3 - hydroxypropyl acrylate; 2,3 - dihydroxypropyl acrylate; 2 - hydroxybutyl acrylate; 4 - hydroxybutyl acrylate; diethylene glycol acrylate; 5 - hydroxypentyl acrylate; 6 - hydroxyhexyl acrylate; triethyleneglycol acrylate; 7 - hydroxyheptyl acrylate; 2 - hydroxyethyl methacrylate; 3 - chloro - 2 - hydroxypropyl methacrylate; 2 - hydroxy - 1 - methylethyl methacrylate; 2 - hydroxypropyl methacrylate; 3 - hydroxypropyl methacrylate; 2,3 - dihydroxypropyl methacrylate; 2 - hydroxybutyl methacrylate; 4 - hydroxybutyl methacrylate; 3,4 - dihydroxybutyl methacrylate; 5 - hydroxypentyl methacrylate; 6 - hydroxyhexyl methacrylate; 1,3 - dimethyl - 3 - hydroxybutyl methacrylate; 5,6 - dihydroxyhexyl methacrylate; and 7 - hydroxyheptyl methacrylate.

Although one of ordinary skill in the art will recognize that many different hydroxyl bearing monomers, including those listed above could be employed, the preferred hydroxy functional monomers for use in the copolymer of the invention are $C_5$—$C_7$ hydroxy alkyl acrylates and/or $C_6$—$C_8$ hydroxy alkyl methacrylates, i.e., esters of $C_2$—$C_3$ dihydric alcohols and acrylic or methacrylic acids.

The remainder of the monomers forming the copolymer, i.e., from 95 to 60 weight percent of the monomers of the copolymer, are other monoethylenically unsaturated monomers. These monoethylenically unsaturated monomers are preferably alpha-beta olefinically unsaturated monomers, i.e., monomeres bearing olefinic unsaturation between the two carbon atoms in the alpha and beta positions with respect to the terminus of an aliphatic carbon-to-carbon chain.

Among the alpha-beta olefinically unsaturated monomers which may be employed are acrylates (meaning ester of either acrylic or methacrylic acids) as well as mixtures of acrylates and vinyl hydrocarbons. Preferably, in excess of 50 weight percent of the total of the copolymer monomers are esters of $C_1$—$C_{12}$ monohydric alcohols and acrylic or methacrylic acids, i.e., methyl methacrylate, ethyl acrylate, butyl acrylate, butyl methacrylate, hexyl acrylate, 2-ethylhexyl acrylate and lauryl methacrylate. Among the monovinyl hydrocarbons suitable for use in forming the copolymers are those containing 8 to 12 carbon atoms and including styrene, alpha methylstyrene, vinyl toluene, t-butylstyrene and chlorostyrene. When such monovinyl hydrocarbons are employed, they should constitute less than 50 weight percent of the copolymer. Other monomers such as vinyl chloride, acrylonitrile, methacrylonitrile, and vinyl acetate may be included in the copolymer as modifying monomers. However, when employed, these modifying monomers should constitute only between 0 and 30 weight percent of the monomers in the copolymer. Small amounts of ethylenically unsaturated carboxylic acids can also be used in preparing the copolymer, such as acrylic acid, methacrylic acid, crotonic acid, itaconic acid and maleic acid.

A preferred embodiment of this invention comprises a copolymer of hydroxyethyl acrylate, acrylic acid and butyl methacrylate.

In preparing the copolymer, the hydroxy functional monomers and the remaining monoethylenically unsaturated monomers are mixed and reacted by conventional free radical initiated polymerization in such proportions as to obtain the copolymer desired. A large number of free radical initiators are known to the art and are suitable for the purpose. These include: benzoyl peroxide; lauryl peroxide; 1-butylhydroxy peroxide; acetylcyclohexylsulfonyl peroxide; diisobutyryl peroxide; di(2-ethylhexyl) peroxydicarbonate; diisopropylperoxydicarbonate; t-butylperoxypivalate; decanoyl peroxide; and azobis-(2-methylpropionitrile). The polymerization is preferably carried out in solution using a solvent in which the hydroxy functional copolymer is soluble. Included among the suitable solvents are toluene, xylene, dioxane and butanone. If the hydroxy functional copolymer is prepared in solution, the solid copolymer can be precipitated by pouring the solution at a slow rate into a nonsolvent for the copolymer such as hexane, octane, or water under suitable agitation conditions.

The copolymer useful in the compositions of this invention can also be prepared by emulsion polymerization, suspension polymerization, bulk polymerization, or combinations thereof, or still other suitable methods. In these methods of preparing copolymers, chain transfer agents may be required to control molecular weight of the copolymer to a desired range. When chain transfer agents are used, care must be taken so they do not decrease the shelf stability of the composition by causing premature chemical reactions.

The copolymer containing pendant hydroxyl functionality is then modified to lengthen the hydroxy containing side chain, i.e., the distance between the copolymer backbone chain and the hydroxyl group on

3

# EP 0 092 624 B1

the side chain. This is done by first reacting the hydroxyl groups with a dicarboxylic acid anhydride under conditions which will generate pendant ester-carboxyl groups. The anhydride used in this reaction step comprises at least 50 percent by weight, and up to 100 percent by weight, of an alkyl hexahydrophthalic anhydride, wherein the alkyl group preferably comprises up to 7 carbons, more preferably up to 4 carbons. Most preferably the anhydride comprises methyl hexahydrophthalic anhydride. The remainder of the anhydrides, i.e., 0 to 50 weight percent, more preferably 0 to 20 weight percent, and most preferably 0 to 10 percent by weight, are selected from a variety of anhydrides, which include but are not limited to, hexahydrophthalic, 2 - dodecene - 1 - ylsuccinic, tetrahydrophthalic, methyl tetrahydrophthalic anhydride and camphoric anhydride, and mixtures of suitable anhydrides.

The anhydride is reacted with the copolymer in an amount sufficient to esterify from 30 to 100 percent, more preferably from 40 to 100 percent, and most preferably from 50 to 100 percent of the pendant hydroxyl groups of the copolymer. Generally, a slight excess of anhydride is used over that actually required to esterify the desired percent of hydroxyl groups of the copolymer. To esterify 100 percent of the hydroxyl groups of the polymer, the anhydride and the hydroxyl groups of the copolymer would be reacted in a 1.2—1.0:1, more preferably a 1.1:1 ratio of equivalents of anhydride to equivalents of hydroxyl groups on the copolymer. By means of this reaction, at least 30% of the pendant hydroxyl groups of the copolymer are esterified, and pendant carboxyl groups suitable for further reaction are generated on the side chain.

This carboxyl group is subsequently reacted with a monoepoxide functional monomer generally in the presence of a catalyst, whereby the carboxyl group opens the epoxide ring of the monomer in an esterification reaction which generates hydroxyl groups. Thus the side chain has been further lengthened and includes hydroxyl groups available for crosslinking with the amine-aldehyde crosslinking agent during curing. The monomer is reacted with the carboxyl groups in an amount sufficient to provide at least 1.0 equivalent of epoxide functionality for each equivalent of carboxyl functionality, i.e., essentially all of the pendant carboxyl groups resulting from the copolymer-anhydride reaction will be reacted with an epoxide to generate the hydroxy functionality. For this purpose, an excess of the monomer may be employed and any excess subsequently removed. The above reaction is carried out at suitable conditions apparent to one skilled in the art. Suitable catalyst for this epoxy/carboxy reaction are well known in the art.

Preferred catalysts useful for this reaction are the tetralkyl ammonium salts such as tetra methyl ammonium chloride, tetraethyl ammonium bromide and trimethyl benzyl ammonium chloride as well as metal salts of a carboxylic acid, such as potassium octoate or chromium III octoate. Other useful catalysts include: metal halides such as chromium trichloride, ferric trichloride, and aluminum trichloride; mercaptans and thioethers such as octyl mercaptan, dimercapto propanol and dimercapto-diethyl ether; tertiary amines such as triethyl amine, pyridine, dimethylaniline, quinoline, β-picoline, ethylpyridine, and the like. Still other catalysts known to catalyze carboxy/epoxy reactions will be apparent to those skilled in this art.

The monoepoxide functional monomer comprises at least 90 percent and up to 100 percent by weight $C_2$—$C_{10}$, preferably $C_3$—$C_7$ monoepoxide functional monomers, which may be substituted by non-interfering functionality such as hydroxyl and includes, but is not limited to, such monomers as ethylene oxide, propylene oxide, epichlorohydrin, 1,2-epoxybutane, 3,4 - epoxy - 1 - butene, 1,2 - epoxyethyl benzene, 1,2 - epoxy - 3 - phenoxy propane, 1,2 - epoxy - 3 - fluoropropane, glycidol and mixtures of the above. Preferably this monomer has terminal epoxide functionality. Propylene oxide is particularly preferred. The remaining monomers, i.e., 0 to 10 percent by weight of the monomers comprise longer chain epoxy monomers such as epoxidized fatty esters, glycidyl ethers, e.g., 2,3-epoxy propyl octyl ether, glycidyl n-hexadecyl ether, glycidyl butyl ether and other monomers, e.g., 1,2 - epoxy - 3,3,3 - trichloropropane, 1,2 - epoxytetradecane, 1,2 - epoxy cyclodecane, exo - 2,3 - epoxy norbornane, 1,4 - epoxy cyclohexane, 1,2 - epoxy - 3 - fluoropropane and suitable mixtures of the above.

Various mixtures of these types of modified copolymers may also be employed within the scope of the compositions of the invention described herein.

Although the above reactions may be carried out with or without solvents, it is generally suitable and preferable in order to achieve the preferred high solids content of the coating compositions of the invention to use a limited amount or no solvent. However, when desirable, suitable solvents which may be employed include those commonly used, such as toluene, xylene, methyl amyl ketone and butyl acetate. It is necessary however to incorporate solvent into the coating composition in order to facilitate application of the coating composition. Typical solvents used in the coating compositions to facilitate, for example spray application at the preferred high solids content, include toluene, xylene, methyl amyl ketone, acetone, 2-ethoxy-1-ethanol, 2-butoxy-1-ethanol, diacetone alcohol, butyl acetate, tetrahydrofuran, ethylacetate, dimethylsuccinate, dimethylglutarate, dimethyladipate or mixtures thereof. The solvent in which the modified hydroxy copolymer of the coating composition is prepared, may be employed as the solvent for the coating composition thus eliminating the need for drying modified copolymer after preparation, if such is desired. As mentioned above, the nonvolatile solids content of the coating composition is preferably at least 60% and more preferably 70% or more, thus limiting the amount of solvent included in the composition. However, while the modified copolymer is particularly suitable for use in a high solids composition, the modified copolymer is also suitable for use in low solids compositions. Determination of optimal solids content for a given application would be within the skill of one in the art.

4

Crosslinking agent

A second essential component of the paint compositions of this invention is crosslinking agent. The crosslinking agent may be an amine-aldehyde or a polyisocyanate.

Amine-aldehyde crosslinking agent

Amine-aldehyde crosslinking agents suitable for crosslinking hydroxy functional bearing materials are well known in the art. Typically, these crosslinking materials are products of reactions of melamine, or urea with formaldehyde and various alcohols containing up to and including 4 carbon atoms. Preferably, the amine-aldehyde crosslinking agents useful in this invention are amine-aldehyde resins such as condensation produces of formaldehyde with melamine, substituted melamine, urea, benzoguanamine or substituted benzoguanamine. Preferred members of this class are methylated melamine-formaldehyde resins such as hexamethoxymethylmelamine. These liquid crosslinking agents have substantially 100 percent nonvolatile content as measured by the foil method at 45°C for 45 minutes. For the purpose of the preferred high solids coatings of the invention it should be recognized that it is important not to introduce extraneous diluents that would lower the final solids content of the coating. Other suitable amine-aldehyde crosslinking agents would be apparent to one skilled in the art.

Particularly preferred crosslinking agents are the amino crosslinking agents sold by American Cyanamid under the trademark "Cymel". In particular, Cymel 301, Cymel 303, Cymel 325 and Cymel 1156, which are alkylated melamine-formaldehyde resins, are useful in the compositions of this invention.

The crosslinking reactions are generally catalytically accelerated by acids. One such catalyst, for example, which may be so employed is p-toluene sulfonic acid generally added to the composition in about .5% by weight based on the total weight of polymer and crosslinking agent. Other useful catalysts are well known to one skilled in the art.

The amine-aldehyde materials function as a crosslinking agent in the composition of the invention by reacting with the hydroxy functionality of the modified copolymer and by reaction with hydroxy functionality on the hydroxy functional additive if such material is included in the composition.

In order to achieve the outstanding properties which make these coating compositions particularly useful as automotive topcoat materials, it is essential that the amount of amino crosslinking agent be sufficient to substantially completely crosslink the hydroxy functionality in the coating composition. Therefore, the amino crosslinking agent should be included in the composition in an amount sufficient to provide at least about 0.60 equivalents, preferably from 0.75 to 3.75 equivalents, of nitrogen crosslinking functionality for each equivalent of hydroxy functionality included in the composition either as a hydroxyl group on the optional hydroxy-functional additive or on the modified hydroxy acrylic copolymer.

Polyisocyanate crosslinking agent

The alternative crosslinking agent for the thermosetting coating composition of the invention is a polyisocyanate, i.e., a compound having 2 or more, preferably 3 or more, reactive isocyanate groups per molecule. This polyisocyanate crosslinking agent is included in the compositions of the invention in an amount sufficient to provide from 0.5 to 1.6, preferably from 0.8 to 1.3, reactive isocyanate groups per hydroxyl group in the composition either as a hydroxyl group on the optional hydroxy functional additive or on the modified hydroxy acrylic copolymer. Most preferably the crosslinking agent is included in an amount sufficient to provide about 1.1 isocyanate groups per hydroxyl group in the composition.

Polyisocyanates are well known in the art and numerous suitable isocyanates having 2 or more reactive isocyanate groups per molecule will be apparent to those skilled in the art. Among the many suitable polyisocyanates are aliphatic, cycloaliphatic and aromatic isocyanate compounds. Representative of the numerous isocyanates which may be employed are (1) aliphatic diisocyanates such as trimethylene diisocyanate, tetramethylene diisocyanate, pentamethylene diisocyanate, hexamethylene diisocyanate, 1,2 - propylene diisocyanate, 1,2 - butylene diisocyanate, 2,3 - butylene diisocyanate, 1,3 - butylene diisocyanate, ethylidene diisocyanate, butylidene diisocyanate, 4,4' - bis(isocyanatocyclohexyl) methane, bis (2 - isocyanato - ethyl) fumarate, 2,6 - diisocyanate methyl caproate, 2,2,4(2,4,4) - trimethylhexamethylene diisocyanate, and dimer acid diisocyanates; (2) cycloaliphatic diisocyanates such as 1,3 - cyclopentane diisocyanate, 1,4 - cyclopentane diisocyanate, 1,2 - cyclopentane diisocyanate, and methylcyclohexylene diisocyanate; (3) aromatic diisocyanates such as m - phenylene diisocyanate, p - phenylenediisocyanate, 4,4' - diphenyl diisocyanate, 1,5 - naphthylene diisocyanate, 1,4 - naphthalene diisocyante; (4) aliphatic/aromatic diisocyanates such as 4,4' - diphenylmethane diisocyanates, 2,4 or 2,6 - tolylene diisocyanate, 4,4' - toluidene diisocyanate, 1,4 - xylylene diisocyanate; (5) nuclear substituted aromatic compounds such as dianisidine diisocyanate, 4,4' - diphenylether diisocyanate, chlorodiphenylene diisocyanate; (6) triisocyanates such as triphenylmethane 4,4',4'' - triisocyanate, 1,3,5 - triisocyanatobenzene, 2,4,6 - triisocyante toluene; (7) tetraisocyanates such as 3',3'',4',4'' - tetraiso-cyanato - 2,2 - diphenylpropane; (8) polymerized isocyanates such as tolylene diisocyanate dimers and trimers; and (9) polyisocyanates such as prepolymers derived from a polyol, including polyether polyols or polyester polyols (including polyethers which are reacted with excess polyisocyanates to form isocyanate terminated prepolymers), simple polyols such as glycols (e.g. ethylene glycol, propylene glycol), other polyols such as glycerol, trimethylol propane, hexane triol, and pentaerythritol, as well as diethylene

5

glycol, tripropylene glycol, monoethers and polyethers, i.e., alkylene oxide condensates of the above polyols.

Especially preferred for use in the compositions of the invention are trimerized products of aliphatic diisocyanates such as 1,6 - hexamethylene diisocyante. Still another particularly preferred type of crosslinking agent is a polyisocyanate having a biuret structure. This type of polyisocyanate is well known as are methods for making the same. One such polyisocyanate crosslinking agent is a high molecular weight biuret of 1,6 - hexamethylene diisocyanate sold by Mobay Chemical Company under the tradename Desmodur N. Exemplary of other biuret type polyisocyanates are those prepared in accordance with U.S. Patent 3,976,622 to Wagner et al.

Optional hydroxy functional additive

Additional hydroxy functionality other than that present on the modified copolymer may be achieved by adding a hydroxy functional additive in amounts up to 50 weight percent based on the total of the three above discussed components and the hydroxy functional additive itself. Such a material serves to provide additional hydroxy functionality so as to provide a more intimate crosslinked structure in the final cured product. The hydroxy functional additives useful in the composition are preferably selected from various polyols having a number average molecular weight ($\overline{M}_n$) of from 150 to 6000, preferably from 400 to 2500. As used herein the term polyol means a compound having two or more hydroxyl groups.

The polyols useful in the invention preferably are selected from the group consisting of: (1) hydroxy functional polyesters; (ii) hydroxy functional polyethers; (iii) hydroxy functional oligoesters, (iv) monomeric polyols; (v) hydroxy functional copolymers produced by free radical polymerization of monoethylenically unsaturated monomers, one of which bears hydroxy functionality and which is included in the copolymer in an amount ranging from 10 to 50 weight percent, and (vi) mixtures of (i)—(v).

U.S. Patent 4,181,784 to Chattha et al teaches a high solids paint composition comprising an optional hydroxy functional additive. The hydroxy functional additives disclosed there are suitable for use as such in the composition of this invention. The following presents a brief description of the optional hydroxy functional additives.

The hydroxy functional polyesters useful in the invention are preferably fully saturated products prepared from aliphatic dibasic acids containing 2—20 carbon atoms, and short chain glycols of up to and including 21 carbon atoms. The molecular weight of these materials ranges from 200 to 2500 and the hydroxy number ranges from 30 to 230.

Among preferred polyesters are products derived from esterification of ethylene glycol and 1,4 - butane diol with adipic acid, ethylene glycol and 1,2 - propylene glycol with adipic acid, azelaic acid and sebacic acid copolyester diols and mixtures thereof.

Among useful polyether diols are polytetramethylene ether glycol, polyethylene glycol and polypropylene glycol.

The hydroxy functional oligoesters useful as hydroxy functional additives in the compositions of the invention are oligoesters preferably having a molecular weight of from 150 to 3000. Such oligoesters may be selected from the group consisting of: (i) oligoesters prepared by reacting a dicarboxylic acid with a monoepoxide such as an alkylene oxide; (ii) oligoesters prepared by reacting a polyepoxide with a monocarboxylic acid; and (iii) oligoesters prepared by reacting a hydroxy functional monocarboxylic acid with either a mono or polyepoxide.

Oligoester (i) is prepared by reacting a dibasic carboxylic acid with a monoepoxide, preferably include those formed by reacting $C_6$—$C_{12}$ dicarboxylic aliphatic acids with ethylene oxide or propylene oxide.

The preparation of oligoesters from carboxylic acids and polyepoxides is well known and is described, for example, in U.S. Patent Nos. 2,456,408 and 2,653,141. Numerous hydroxy functional oligoesters within this general category will be apparent to those skilled in the art.

The third type of hydroxy functional oligoester, i.e., those prepared by reaction of a hydroxy functional monocarboxylic acid with an epoxide is described in U.S. Patent 3,404,018. While the epoxides employed in accordance with the teachings of that patent are polyepoxides, oligoesters may be prepared in a similar manner to that described therein by employing a monoepoxide, such as an alkylene oxide, and a hydroxy functional monocarboxylic acid as described therein.

Among the numerous monomeric polyols which may be employed as the hydroxy functional additive are the various short chain glycols of up to and including 21 carbon atoms which are useful in preparing the hydroxy functional polyesters discussed above. Other conventional polyhydric alcohols such as glycerols and sugar alcohols are also among the numerous monomeric polyols which will be apparent to those skilled in the art.

The hydroxy bearing copolymer useful as the hydroxy functional additive may be formed from monoethylenically unsaturated monomers, with from 10 to 50 weight percent bearing hydroxyl functionality.

Although one of ordinary skill in the art will recognize that many different hydroxy bearing monomers could be employed, the preferred hydroxy functional monomers for use as hydroxy functional additives in the compositions of the invention are $C_5$—$C_7$ hydroxy alkyl acrylates and/or $C_6$—$C_8$ hydroxy alkyl methacrylates, i.e., esters of $C_2$—$C_3$ dihydric alcohols and acrylic or methacrylic acids.

The remainder of the monomers forming the hydroxy functional copolymer, i.e. from 90 to 50 weight percent of the monomers of the copolymer, are other monoethylenically unsaturated monomers. These monoethylenically unsaturated monomers are preferably alpha-beta olefinically unsaturated monomers, i.e., monomers bearing olefinic unsaturation between the two carbon atoms in the alpha and beta positions with respect to the terminus of an aliphatic carbon-to-carbon chain.

Other materials

In addition to the above discussed components, other materials may be included in the coating compositions of the invention. These include materials such as catalysts, antioxidants, U.V. absorbers, surface modifiers and wetting agents, as well as pigments.

Surface modifiers or wetting agents are common additives for liquid paint compositions. The exact mode of operation of these surface modifiers is not known, but it is thought that their presence contributes to better adhesion of the coating composition to the surface being coated and helps formation of thin coatings, particularly on metal surfaces. These surface modifiers are exemplified by acrylic polymers containing 0.1—10 percent by weight of copolymerized monoethylenically unsaturated carboxylic acids such as methacrylic acid, acrylic acid or itaconic acid, cellulose acetate butyrate, silicone oils or mixtures thereof. Of course, the choice of surface modifiers or wetting agent is dependent upon the type of surface to be coated and selection of the same is clearly within the skill of the artisan.

The coating composition of the invention also may include pigments. The amount of pigment in the coating composition may vary, but preferably is from 3 to 45 weight percent based on the total weight of the paint composition. If the pigment is metallic flake, the amount ranges from 1 to 20 weight percent.

For many applications of the coating compositions of this invention, particularly high solids compositions it may be desirable to employ flow control additives to provide sag free coatings. Among numerous such materials NAD's such as described by Porter (S. Porter, Jr. and B. N. McBane, U.S. Patent 4,025,474, May 24, 1977) are compatible with the coating compositions. These particle dispersions may be included in an amount up to 15% by weight of the total composition. Other types of NAD's such as described by D. L. Maker and S. C. Peng (U.S. Patent 3,814,721, June 4, 1974) also may be included in the paint composition.

Application techniques

The coating composition can be applied by conventional methods known to those skilled in the art. These methods include roller coating, spray coating, dipping or brushing and, of course, the particular application technique chosen will depend on the particular substrate to be coated and the environment in which the coating operation is to take place.

A particularly preferred technique for applying the high solids coating compositions, particularly when applying the same to automobiles as topcoats, is spray coating through the nozzle of a spray gun.

High solids paints have in the past caused some difficulty in spray coating techniques because of the high viscosity of the materials and resultant problems in clogging of spray guns. However, because the compositions of this invention demonstrate relatively low viscosity considering the high solids content, they can be applied by spray coating techniques.

The invention will be further understood by referring to the following detailed examples. It should be understood that the specific examples are presented by way of illustration and not by way of limitation. Unless otherwise specified, all references to "parts" is intended to mean parts by weight.

Examples 1 to 20 illustrate the use of an amino-aldehyde cross-linking agent. Examples 21 to 37 illustrate the use of a polyisocyanate cross-linking agent.

Example 1

Five hundred grams of a solution of hydroxy acrylic polymer (70% solids in methyl amyl ketone, ($\overline{M}_n$=2000) containing hydroxy ethyl acrylate (25%), acrylic acid (4%) and butyl methacrylate (71%) is combined with methyl hexahydrophthalic anhydride (182.00 g, 70% solids in methyl amyl ketone) and is charged in a three-neck flask equipped with a gas inlet tube, thermometer, mechanical stirrer and water-cooled condenser. The reaction mixture is stirred and maintained at 80°C for seven hours under a nitrogen atmosphere. Completion of reaction is indicated by infrared spectra (disappearance of anhydride group). The resulting acid product is reacted with 59.00 grams propylene oxide containing 0.27 grams Cordova Accelerator AMC™-2 (Cordova Chemical Company). The addition of propylene oxide is carried out dropwise over a period of three hours. After refluxing the mixture at 100—110°C for seven hours, the excess propylene oxide is removed by vacuum distillation. The modified copolymer with the lengthened, hydroxy containing side chains has a molecular weight of 2850 ($\overline{M}_n$=2850, 70% solids in methyl amyl ketone).

Ninety grams of above modified acrylic hydroxy polymer (70% solids in methyl amyl ketone) and 20.40 grams Cymel 301 (American Cyanamid) are dissolved in fifteen grams of butyl acetate and 0.9 grams of 10% solution of p-toluene sulfonic acid in ethanol are added to the solution. The coating formulation is sprayed on primed steel panels and baked at 130°C for 20 minutes to obtain coatings with excellent solvent (xylene and methyl ethyl ketone) resistance. These coatings also exhibit improved impact strength.

Example 2

The preparation of a modified hydroxy acrylic polymer is repeated according to Example 1 with the single exception that 120 g. of methyl hexahydrophthalic anhydride (70% solids in methyl amyl ketone) is used for preparing the acid product. A coating formulation containing the above modified polymer is prepared by combining the following ingredients:

| | | |
|---|---|---|
| 1. | Modified hydroxy acrylic polymer (70% solids in methyl amyl ketone) | 100.00 g |
| 2. | Cymel 301 (American Cyanamid) | 25.00 g |
| 3. | p-toluene sulfonic acid (added as a 10% solution in ethanol) | 1.1 g |
| 4. | Butyl acetate | 17.00 g |

The above ingredients are mixed with a paint shaker, sprayed on primed steel panels and baked at 125°C for 25 minutes. The cured coatings have good physical properties and enhanced flexibility.

Example 3

The procedure of Example 1 is repeated with the single exception that 190.00 grams of methyl hexahydrophthalic anhydride (70% solids in methyl amyl ketone) are used in preparation of acid product. A coating formulation including this modified acrylic hydroxy polymer is prepared by combining the following ingredients:

| | | |
|---|---|---|
| 1. | Modified hydroxy acrylic polymer (70% solids in methyl amyl ketone) | 110.00 g |
| 2. | Cymel 301 (American cyanamid) | 24.00 g |
| 3. | p-toluene sulfonic acid (10% solution in ethanol) | 1.20 g |
| 4. | Butyl acetate | 18.00 g |

The above ingredients are mixed and sprayed on primed steel panels. The panels are cured at 130°C for 20 minutes to obtain coatings with good physical properties and enhanced flexibility.

Example 4

The procedure of Example 1 is repeated with the single exception that the molecular weight of the unmodified hydroxy acrylic polymer is 3800 ($M_n$=3800, 70% solids in methyl amyl ketone). A coating composition including the resulting modified, copolymer is prepared by combining the following ingredients:

| | | |
|---|---|---|
| 1. | Modified hydroxy acrylic polymer (70% solids in methyl amyl ketone) | 90.00 g |
| 2. | Cymel 301 (American Cyanamid) | 32.00 g |
| 3. | p-toluene sulfonic acid (10% solution in ethanol) | 1.30 g |
| 4. | Butyl acetate | 20.00 g |

The above ingredients are mixed with a paint shaker and sprayed on primed steel panels. The panels are cured at 120°C for 30 minutes to obtain coatings with excellent solvent (xylene and methyl ethyl ketone) resistance. The coating exhibits enhanced stone-chip resistance as compared with coatings formed from the unmodified polymer in chip resistance tests carried out in accordance with ASTM D-3170-74.

Example 5

Ninety grams of modified hydroxy acrylic polymer from Example 1 are mixed with 13.00 grams of aluminum flakes (65% solids in naphtha) in 18 grams methyl amyl ketone and 36.00 grams butyl acetate. Twenty one grams of Cymel 301, five grams cellosolve acetate and 1.00 gram of p-toluene sulfonic acid (10% solution in ethanol) are added to above mixture. The resulting coating formulation is sprayed on primed steel panels and cured at 130°C for 20 minutes to obtain silver metallic coatings with excellent solvent (xylene and methyl ethyl ketone) resistance and enhanced flexibility.

Example 6

205.00 g of the solution of the modified hydroxy acrylic polymer from Example 1 is mixed with methyl amyl ketone (350.00 g) and titanium dioxide (1450.00 g) added with agitation to this solution. The resulting mixture is whipped with a cowl's blade at 90 cycles per second for 20 minutes to obtain a finely dispersed mill base.

Seventy grams of above mill base, one hundred and ten grams of modified hydroxy acrylic polymer, from Example 1, twenty five grams Cymel 301 (American Cyanamid), 1.1 grams p-toluene sulfonic acid (10% solution in ethanol) are mixed with 25.00 grams butyl acetate and 20.00 grams methyl amyl ketone. The resulting paint formulation is applied on primed steel panels. The panels are baked at 130°C for 20 minutes to obtain coatings with excellent solvent (xylene and methyl ethyl ketone) resistance and enhanced stone-chip resistance.

Example 7

The procedure of Example 1 is repeated with the exception that to the formulation of Example 1 are added seven grams of caprolactone based hydroxy ester PCP-0300 (Union Carbide) and 3.00 grams Cymel 301 (American Cyanamid). The coating formulation is sprayed on primed steel panels and cured at 125°C for 30 minutes to obtain a coating with excellent solvent (xylene and methyl ethyl ketone) resistance and improved impact strength.

Example 8

The procedure of Example 1 is repeated with the single exception that five grams of Niax Polyol LHT-34 (Union Carbide), two grams Cymel 301 and five grams methyl amyl ketone are added to formulation described in Example 1. The resulting coating formulation is applied on primed steel panels and cured at 130°C for 20 minutes to obtain coatings with excellent solvent resistance and improved stone-chip resistance.

Example 9

Example 1 is repeated with the single exception that 21.00 grams of Cymel 303 are used in place of Cymel 301. The resulting formulation is sprayed on primed steel panels and cured at 130°C for 20 minutes. The cured films exhibit excellent solvent resistance and improved impact strength.

Example 10

The procedure of Example 1 is repeated with the following exceptions: 27.00 grams of Cymel 325 (American Cyanamid) are used in place of Cymel 301 and 2.3 grams of phenyl acid phosphate (40% solution in Solvesso® 100) in place of p-toluene sulfonic acid. The mixture is sprayed on primed steel panels and cured at 125°C for 25 minutes. The cured films exhibit excellent solvent (xylene and methyl ethyl ketone) resistance and enhanced flexibility.

Example 11

Example 10 is repeated with the single exception that Resimine XC 717 (Monsanto Co.) is used in place of Cymel 325. The cured films (130°C for 20 minutes) exhibit good physical properties and impact strength.

Example 12

The procedure of Example 1 is repeated with the single exception that 3.00 grams of Cymel 301 are replaced by 4.00 grams of benzoguanamine 1123 (American Cyanamid). The coating formulation are sprayed on primed steel panels and cured at 140°C for 20 minutes. The cured films exhibit good solvent resistance and improved stone-chip resistance.

Example 13

Example 1 is repeated with the single exception that 4.00 grams of Cymel 301 are replaced by 3.00 grams of glycoluril 1170 (American Cyanamid). The formulation is applied by spraying on primed steel panels and cured at 135°C for 25 minutes to obtain coatings with good physical properties and enhanced stone-chip resistance.

Example 14

Example 1 is repeated with the exception that 35.00 grams of Cymel 301 are used for crosslinking the modified polymer of Example 1. The resulting formulation is sprayed on primed steel panels and baked at 130°C for 20 minutes. The coatings show good adhesion and solvent resistance.

Example 15

Example 10 is repeated with the exception that 36.00 grams Cymel 325 are used for crosslinking the modified polymer. The coating formulation is sprayed on primed steel panels and at 130°C for 20 minutes. The coatings have good physical properties.

Example 16

The procedure of Example 1 was repeated with the exception that the coating formulation deposited on the primed panels is cured at 150°C for 7 minutes. Coatings with good properties are obtained.

Example 17

Example 1 was repeated with the exception that the coated panels are baked at 100°C for 30 minutes. Coatings with good solvent resistance are obtained.

Example 18

The procedure of Example 1 is repeated with the exception that 10.00 grams of the propylene oxide are substituted by an equal amount of glycidol (Aldrick Chem. Co.), and 36.00 grams of Cymel 325 are used in place of Cymel 301. The cured film (130°C for 25 min) exhibit good adhesion and solvent resistance.

Example 19

Example 1 is repeated with the single exception that 6.00 grams of the propylene oxide are replaced with an equal amount of n-butyl glycidyl ether. Coatings with good physical properties are obtained.

Example 20

Nine (9) parts of aluminum flakes (65% in naphtha) and 15 parts of nonaqueous dispersion (42% solids by weight), prepared as described in Example A of U.S. Patent 4,025,474, are blended with the composition described in Example 2. The resulting formulation is applied to primed steel panels which are baked at 130°C/19 min to obtain silver metallic coatings.

Example 21

A hydroxy-functional acrylic polymer (1000.00 g, 70% solids, $\overline{M}_n$=1830) containing hydroxyethyl acrylate (25%), acrylic acid (4%) and butyl methacrylate (71%) was combined with methyl hexahydrophthalic anhydride (363.00 g, 70% solids in methyl amyl ketone) and charged in a three neck flask equipped with a gas-inlet tube, thermometer and mechanical stirrer. The reaction mixture was heated to 80°C and stirred at that temperature for seven hours under a nitrogen atmosphere. Infrared spectra of product indicated complete reaction of anhydride group. The resulting carboxylic acid product was reacted with 97.5 g propylene oxide containing 0.50 g Cordova accelerator AMC™-2. After refluxing the mixture at 105°C for eight hours, the excess propylene oxide was removed by vacuum distillation. The modified polymer with the lengthened, hydroxy-containing side chains had molecular weight of 2730 ($\overline{M}_n$=2730, 70% solids).

A coating formulation was prepared by combining the following ingredients:

| | | |
|---|---|---|
| 1. | Modified hydroxy acrylic polymer (70% solids in methyl amyl ketone) | 110.00 g |
| 2. | Desmodure L-2291A (Mobay Chem. Co.) | 23.00 g |
| 3. | Dibutyltin dilaurate | 0.01 g |
| 4. | Butyl acetate | 17.00 g |

The resulting formulation was sprayed on primed steel panels and cured at 130°C for 20 minutes. The cured coatings exhibited excellent adhesion, hardness and solvent (xylene and methyl ethyl ketone) resistance. The impact strength of these coating compositions was superior to that of similar formulations based on the parent acrylic polymer.

Example 22

The procedure of Example 21 was repeated with the exception that 300.00 g (70% solids in methyl amyl ketone) of methyl hexahydrophthalic anhydride was used for the preparation of modified hydroxy acrylic polymer. The modified polymer was combined with the following ingredients for preparing a coating formulation:

| | | |
|---|---|---|
| 1. | Modified acrylic hydroxy polymer (70% solids in methyl amyl ketone) | 100 g |
| 2. | Desmodure L-2291A (Mobay Chem. Co.) | 23.00 g |
| 3. | Dibutyltin dilaurate | 0.015 g |
| 4. | Butyl acetate | 15.00 g |

The above formulation was mixed with a paint shaker and sprayed on primed steel panels. After curing the panels at 130°C for 18 minutes, the coatings exhibited excellent physical properties and improved impact strength.

Example 23

The procedure of Example 21 was repeated with the exception that 383.00 g of methyl hexahydrophthalic anhydride were used for the preparation of modified hydroxy acrylic polymer. Coating prepared from this polymer had good physical properties and improved flexibility.

Example 24

The procedure of Example 21 was repeated with the single exception that the starting hydroxy polymer had a molecular weight of 3950 ($\overline{W}_2/\overline{M}_n$=8100/3950). Coating prepared from this modified acrylic hydroxy polymer had good physical properties and enhanced flexibility.

Example 25

The procedure of Example 21 is repeated for preparing the modified hydroxy acrylic polymer with

10

lengthened, hydroxy-bearing side chains. A coating composition containing the above-modified acrylic hydroxy polymer was prepared as follows:

| | | |
|---|---|---|
| 1. | Modified hydroxy acrylic polymer described above (70% solids in methyl amyl ketone) | 200.00 g |
| 2. | Isophorone diisocyanate (IPDI) (Vega-chemie AG) | 23.00 g |
| 3. | Dibutyltin dilaurate | 0.02 g |
| 4. | Butyl acetate | 32.00 g |

The above formulation was mixed with a paint shaker and sprayed on primed steel panels. After curing the wet films at 125°C for 20 minutes, the coating had good solvent (xylene and methyl ethyl ketone) resistance and enhanced impact strength.

Example 26
The procedure of Example 25 was repeated with the exception that 26 g. Isophorone diisocyanate (IPDI) was used for preparing the coating formulation. Films cured at 125°C for 15 minutes exhibited good physical properties.

Example 27
The procedure of Example 25 was repeated with the single exception that 20.00 g. Desmodure L-2291A (Mobay Chem. Co.) and 11.50 g. Isophorone diisocyanate (IPDI) were used for curing the modified acrylic polymer. The cured coatings exhibited good solvent (xylene and methyl ethyl ketone) resistance and improved stone-chip resistance.

Example 28
Five grams of isophorone diisocyanate trimerisate (addut T 1890 (v) sold by Veba Chemie) is combined with 2.00 g of methyl amyl ketone and aded to formulation described in Example 21. The resulting formulation is applied by spraying to primed steel panels which are baked at 125°C for 25 minutes to obtain coatings with excellent resistance and enhanced flexibility.

Example 29
Four grams of a linear urea cycloaliphatic isophorone diisocyanate addut (sold under the name H 3150(v) by Veba Chemie) were combined with 2.0 grams of butyl acetate and added to the formulation described in Example 21. The resulting coating formulation is cured at 130°C for 20 minutes to obtain coatings with good physical properties.

Example 30
The procedure of Example 21 is repeated with the exception that Desmodur L-2291L is replaced by 12.00 g Desmodur N-100 (Mobay Chem. Co.) and 2.3 g toluene diisocyanate. The resulting formulation is applied on primed steel panels and cured at 120°C for 25 minutes. The cured films have good adhesion, hardness and solvent (xylene and methyl ethyl ketone) resistance. They also exhibit enhanced flexibility.

Example 31
The procedure of Example 21 is repeated with the exception that to the formulation of Example 1 are added eight grams of caprolactone based hydroxy ester PCP-0300 (Union Carbide) and two grams Desmodur L-2291A. The coating formulation is sprayed on primed steel panels which are baked at 140°C for 15 minutes to obtain coatings with excellent solvent (xylene and methyl ethyl ketone) resistance and enhanced stone-chip resistance.

Example 32
The procedure of Example 21 is repeated with the single exception that six grams of an hydroxy-functional caprolactone polyester sold under the name Niax Polyol LHT-34 by Union Carbide, two grams Desmodure L-2291L (Mobay Chem. Co.) and three grams of methyl amyl ketone are added to the formulation described in Example 21. The resulting formulation is applied on primed steel panels and cured at 130°C for 20 minutes to obtain coatings with excellent solvent (xylene and methyl ethyl ketone) resistance and improved impact strength.

Example 33
One hundred (100) grams of the modified hydroxy acrylic polymer from Example 21 are mixed with fifteen grams of aluminum flakes (65% solids in naphtha) in 20 g methyl amyl ketone and 40.00 g butyl acetate. Twenty-five grams of Desmodur L2291A (Mobay Chem. Co.), five grams cellosolve acetate and 0.015 grams dibutyltin dilaurate are added to above mixture. The resulting coating formulation is sprayed on primed steel panels and cured at 130°C for 20 minutes to obtain silver metallic coatings with excellent solvent resistance and enhanced flexibility.

11

Example 34

Modified hydroxy acrylic polymer (102.00 g) from Example 1 is dissolved in methyl amyl ketone (173.00 g) and titanium dioxide (725.00 g) is added with agitation to the above solution. The resulting mixture is whipped with a cowl's blade at 90 cycles per second for 20 minutes to obtain a finely dispersed mill base.

Seventy grams of above millbase, 110 grams of the modified hydroxy acrylic polymer from Example 21, twenty-three grams Desmodure L-2291A, 0.02 grams dibutyltin dilaurate are mixed with 25.00 g butyl acetate and 20.00 g methyl amyl ketone. The resulting paint formulation is applied on primed steel panels. The panels are baked at 120°C for minutes to obtain coatings with excellent solvent (xylene and methyl ethyl ketone) resistance. The coatings exhibited enhanced stone-chip resistance.

Example 35

The procedure of Example 21 is repeated with the single exception that the panels are cured at 140°C for 10 minutes. Cured coatings with good physical properties were obtained.

Example 36

The procedure of Example 21 is repeated with the single exception that the coated panels are cured at 100°C for 30 minutes to obtain coating with good properties.

Example 37

Twenty-one (21) parts of nonaqueous dispersion (42% solids by weight), prepared as described in Example A of U.S. Patent 4,025,474, are included in the hydroxy component of Example 33 and it is blended with the isocyanate described therein. The resulting formulation is sprayed on primed steel panels and cured at 132°C for 10 minutes to obtain silver metallic coatings.

**Claims**

1. An acrylic copolymer which is the stepwise reaction product of:

(i) a copolymer bearing pendant hydroxyl groups and having a number average molecular weight ($\overline{M}_n$) of from 1000 to 5000, said copolymer being prepared from (a) from 5 to 40 weight percent of monoethylenically unsaturated hydroxy alkyl ester of the formula $CH_2=CR_1—COOR_2$ wherein $R_1$ is H or an alkyl group and $R_2$ is a hydroxy alkyl group and (b) from 95 to 60 weight percent of other monoethylenically unsaturated monomer;

(ii) dicarboxylic acid anhydride comprising at least 50 percent by weight of an alkyl hexahydrophthalic anhydride, wherein (i) and (ii) are reacted in an amount sufficient to esterify from 30 to 100 percent of said pendant hydroxyl groups of said copolymer thereby generating pendant carboxyl groups; and

(iii) a monoepoxide functional monomer comprising at least 90 percent by weight $C_2—C_{10}$ monoepoxide functional monomers, wherein said monomer is reacted with said pendant carboxyl groups of the polymer reaction product of (i) and (ii) so as to provide at least 1.0 equivalent of epoxide groups per equivalent of said pendant carboxyl groups to generate pendant hydroxyl groups.

2. A copolymer according to claim 1 wherein said monoethylenically unsaturated hydroxy alkyl ester comprises one or more $C_5—C_7$ hydroxy alkyl acrylates, one or more $C_6—C_8$ hydroxy alkyl methacrylates or a mixture thereof.

3. A copolymer according to claim 1 or claim 2 wherein said other monoethylenically unsaturated monomer comprise an acrylate or other vinyl monomer, or a mixture of said acrylates and other vinyl monomers.

4. A copolymer according to any one of claims 1 to 3 wherein said alkyl group of said alkyl hexahydrophthalic anhydride comprises a lower alkyl group having up to seven carbons.

5. A copolymer according to any one of claims 1 to 4 wherein said dicarboxylic acid anhydride comprises at least 80 percent by weight of an alkyl hexahydrophthalic anhydride.

6. A copolymer according to claim 4 or claim 5 wherein said alkyl hexahydrophthalic anhydride is methyl hexahydrophthalic anhydride.

7. A copolymer according to any one of claims 1 to 6 wherein up to 50 percent by weight of said dicarboxylic acid anhydride employed in the preparation of said copolymer comprises hexahydrophthalic anhydride, 2 - dodecene - 1 - ylsuccinic anhydride, tetrahydrophthalic anhydride, methyl tetrahydrophthalic anhydride, or camphoric anhydride, or a mixture thereof.

8. A copolymer according to any one of claims 1 to 7 wherein said $C_2—C_{10}$ monoepoxide functional monomer comprises ethylene oxide, propylene oxide, epichlorohydrin, glycidol, 1,2-epoxy butane, 1,2 - epoxy - 1 - butene, 1,2 - epoxyethyl benzene or 1,2 - epoxy - 3 - phenoxy propane, or a mixture thereof.

9. A copolymer according to claim 8, wherein said $C_2—C_{10}$ monoepoxide functional monomer is a $C_3—C_7$ monomer.

10. A copolymer according to claim 9 wherein said $C_3—C_7$ monomer contains terminal epoxide functionality.

11. A copolymer according to any one of claims 1 to 10 wherein said monoepoxide functional monomer other than said $C_2—C_{10}$ monoepoxide monomer comprises an epoxidized fatty ester, 2,3 - epoxy

EP 0 092 624 B1

tetra propyl octyl ether, 1,2 - epoxy 3,3,3 - trichloropropane, 1,2 - epoxytetradecane, 1,2 - epoxycyclo-decane, exo - 2,3 - epoxynorbornane, 1,4 - epoxycyclohexane, or 1,2 - epoxy - 3 - fluoropropane, or a mixture thereof.

12. A coating composition comprising:—

(A) an acrylic copolymer according to any one of claims 1 to 11;

(B) an amine-aldehyde crosslinking agent;

(C) 0—50 weight percent based on the total weight of (A), (B), (C) and (D) of a hydroxy functional additive having a number average molecular weight ($M_n$) of from 150 to 6000; and

(D) solvent,

said amine-aldehyde crosslinking agent being included in said composition in an amount sufficient to provide at least 0.60 equivalents of nitrogen crosslinking functionality for each equivalent of hydroxyl fuctionality included in said composition either as a hydroxyl group on said modified hydroxy acrylic copolymer or as a hydroxyl group on said hydroxy functional additive.

13. A coating composition according to claim 12 wherein said amine-aldehyde crosslinking agent comprises a condensation product of formaldehyde with melamine, substituted melamine, urea, benzoguanamine or substituted benzoguanamine or a mixture of said condensation products and is included in an amount sufficient to provide from 0.75 to 3.75 equivalents of nitrogen crosslinking functionality for each equivalent of hydroxy functionality included in said composition, either as a hydroxyl group on said modified hydroxy acrylic copolymer or as a hydroxyl group on said hydroxy functional additive.

14. A coating composition comprising:—

(A) an acrylic copolymer according to any one of claims 1 to 11;

(B) a polyisocyanate crosslinking agent having two or more reactive isocyanate groups per molecule;

(C) 0—50 weight percent based on the total weight of (A), (B), (C) and (D) of a hydroxy functional additive having a number average molecular weight ($\overline{M}_n$) of between about 150 and about 6000, and

(D) solvent;

said polyisocyanate crosslinking agent being included in said composition in an amount sufficient to provide from 0.50 to 1.6 reactive isocyanate groups for each equivalent of hydroxyl functionality included in said composition either as a hydroxyl group on said modified hydroxy acrylic copolymer or as a hydroxyl group on said hydroxy functional additive.

15. A coating composition according to claim 14, wherein said polyisocyanate crosslinking agent is included in said composition in an amount sufficient to provide from 0.8 to 1.3 reactive isocyanate groups per hydroxyl group in said composition.

16. A coating composition according to claim 14 or claim 15 wherein said polyisocyanate crosslinking agent is a diisocyanate.

17. A coating composition according to claim 14 or claim 15 wherein said polyisocyanate crosslinking agent has 3 or more reactive isocyanates per molecule.

18. A coating composition according to claim 17 wherein said polyisocyanate crosslinking agent is a trimerized product of an aliphatic diisocyanate.

19. A coating composition according to claim 18 wherein said polyisocyanate crosslinking agent is a trimerized reaction product of 1,6 - hexamethylene diisocyanate.

20. A coating composition according to claim 14 or claim 15 wherein said polyisocyanate crosslinking agent is a polyisocyanate having a biuret structure.

21. A coating composition according to any one of claims 12 to 20 wherein said hydroxy functional additive is a polyol selected from the group consisting of (i) hydroxy functional polyesters, (ii) hydroxy functional polyethers, (iii) hydroxy functional oligoesters, (iv) monomeric polyols, (v) hydroxy functional copolymers formed from monoethylenically unsaturated monomers, one or more of which bears hydroxy functionality and which is included in said copolymer in amounts ranging from 10 to 50 weight percent of said copolymer, and (vi) mixtures of (i)—(v).

22. A coating composition according to any one of claims 12 to 21 which further comprises up to 15 weight percent based on the total weight of the composition of a flow control additive.

23. A coating composition according to any one of claims 12 to 22 wherein said dicarboxylic acid anhydride consists of methyl hexahydrophthalic anhydride and said monoepoxide functional monomer consists of a $C_2$—$C_{10}$ monoepoxide functional monomer.

24. A coating composition according to any one of claims 12 to 23 containing at least 60 percent by weight of nonvolatile solids.

**Patentansprüche**

1. Acrylcopolymerisat als Produkt der stufenweisen Reaktion von:

(i) einem Copolymerisat mit Hydroxylseitengruppen und einem zahlenmittleren Molekulargewicht ($M_n$) von 1000 bis 5000, wobei dieses Copolymerisat aus (a) 5 bis 40 Gewichtsprozent monoäthylenisch ungesättigtem Hydroxyalkylester der Formel $CH_2=CR_1$—$COOR_2$, worin $R_1$ für H oder eine Alkylgruppe und $R_2$ für eine Hydroxyalkylgruppe stehen, und (b) 95 bis 60 Gewichtsprozent sonstigem monoäthylenisch ungesättigtem Monomeren hergestellt ist,

13

(ii) aus mindestens 50 Gewichtsprozent eines Alkylhexahydrophthalsäureanhydrids bestehendem Dicarbonsäureanhydrid, wobei (i) und (ii) in einer solchen Menge zur Reaktion gebracht werden, daß 30 bis 100 Prozent jener Hydroxylseitengruppen in besagtem Copolymerisat unter Bildung von Carboxylseitengruppen verestert werden, und

(iii) einem monoepoxidfunktionellen Monomeren, das aus mindestens 90 Gewichtsprozent $C_2$—$C_{10}$-monoepoxidfunktionellen Monomeren besteht, wobei dieses Monomere mit jenen Carboxylseitengruppen des polymeren Reaktionsprodukts aus (i) und (ii) so umgesetzt wird, daß mindestens 1,0 Äquivalent Epoxidgruppen pro Äquivalent solcher Carboxylseitengruppen zur Bildung von Hydroxylseitengruppen entsteht.

2. Copolymerisat nach Anspruch 1, worin jener monoäthylenisch ungesättigte Hydroxylalkylester aus einem oder mehreren $C_5$—$C_7$-Hydroxyalkylacrylaten, einem oder mehreren $C_6$—$C_8$-Hydroxyalkylmethacrylaten oder deren Gemisch besteht.

3. Copolymerisat nach Anspruch 1 oder 2, worin jenes sonstige monoäthylenisch ungesättigte Monomere aus einem Acrylat oder sonstigem Vinylmonomeren oder einem Gemisch solcher Acrylate und sonstigen Vinylmonomeren besteht.

4. Copolymerisat nach einem der Ansprüche 1 bis 3, worin jene Alkylgruppe in besagtem Alkylhexahydrophthalsäureanhydrid aus einer Niederalkylgruppe mit bis zu siben Kohlenstoffatomen besteht.

5. Copolymerisat nach einem der Ansprüche 1 bis 4, worin jenes Dicarbonsäureanhydrid aus mindestens 80 Gewichtsprozent eine Alkylhexahydrophthalsäureanhydrids besteht.

6. Copolymerisat nach Anspruch 4 oder 5, worin jenes Alkylhexahydrophthalsäureanhydrid Methylhexahydrophthalsäureanhydrid ist.

7. Copolymerisat nach einem der Ansprüche 1 bis 6, worin bis zu 50 Gewichtsprozent jenes bei der Herstellung des besagten Copolymerisats eingesetzten Dicarbonsäureanhydrids aus Hexahydrophthalsäureanhydrid, 2 - Dodecenyl - (1) - bernsteinsäureanhydrid, Tetrahydrophthalsäureanhydrid, Methyltetrahydrophthalsäureanhydrid oder Camphersäureanhydrid oder einem Gemisch von diesen bestehen.

8. Copolymerisat nach einem der Ansprüche 1 bis 7, worin jenes $C_2$—$C_{10}$-monoepoxidfunktionelle Monomere aus Äthylenoxid, Propylenoxid, Epichlorhydrin, Glycidol, 1,2-Epoxybutan, 1,2-Epoxy-1-buten, 1,2-Epoxyäthylbenzol oder 1,2-Epoxy-3-phenoxypropan oder einem Gemisch von diesen besteht.

9. Copolymerisat nach Anspruch 8, worin dieses $C_2$—$C_{10}$-monoepoxidfunktionelle Monomer ein $C_3$—$C_7$-Monomer ist.

10. Copolymerisat nach Anspruch 9, worin dieses $C_3$—$C_7$-Monomer endständige Epoxidfunktionalität enthält.

11. Copolymerisat nach einem der Ansprüche 1 bis 10, worin besagtes, von jenem $C_2$—$C_{10}$-Monoepoxidmonomeren verschiedene monoepoxidfunktionelle Monomer einen epoxidierten Fettsäureester, 2,3 - Epoxytetrapropyloctyläther, 1,2 - Epoxy - 3,3,3 - trichlorpropan, 1,2 - Epoxytetradecan, 1,2 - Epoxycyclodecan, Exo - 2,3 - epoxynorbornan, 1,4 - Epoxycyclohexan oder 1,2 - Epoxy - 3 - fluoropropan oder ein Gemisch von diesen darstellt.

12. Beschichtungszusammensetzung, bestehend aus:
(A) einem Acrylcopolymerisat nach einem der Ansprüche 1 bis 11,
(B) einem Amin/Aldehydvernetzungsmittel,
(C) 0—50 Gewichtsprozent, bezogen auf das Gesamtgewicht von (A), (B), (C) und (D), eines hydroxyfunktionellen Zusatzstoffes mit einem zahlenmittleren Molekulargewicht ($M_n$) von 150 bis 6000 und
(D) Lösungsmittel,
wobei dieses Amin/Aldehydvernetzungsmittel in besagter Zusammensetzung in einer solchen Menge eingesetzt wird, daß jeweils mindestens 0,60 Äquivalent Stickstoffvernetzungsfunktionalität auf ein Äquivalent in dieser Zusammensetzung entweder als Hydroxygruppe auf jenem modifizierten Hydroxyacrylcopolymerisat oder als Hydroxylgruppe auf jenem hydroxyfunktionellen Zusatzstoff vorliegende Hydroxyfunktionalität kommt.

13. Beschichtungszusammensetzung nach Anspruch 12, worin dieses Amin/Aldehydvernetzungsmittel aus einem Kondensationsprodukt von Formaldehyd mit gegebenenfalls substituiertem Melamin, Harnstoff, gegebenenfalls substituiertem Benzoguanamin oder einem Gemisch solcher Kondensationsprodukte besteht und in einer solchen Menge eingesetzt wird, daß jeweils 0,75 bis 3,75 Äquivalente Stickstoffvernetzungsfunktionalität auf ein Äquivalent in dieser Zusammensetzung entweder als Hydroxylgruppe auf jenem modifizierten Hydroxyacrylcopolymerisat oder als Hydroxylgruppe auf jenem hydroxyfunktionellen Zusatzstoff vorliegenden Hydroxyfunktionalität kommen.

14. Beschichtungszusammensetzung bestehend aus:
(A) einem Acrylcopolymerisat nach einem der Ansprüche 1 bis 11,
(B) einem Polyisocyanatvernetzungsmittel mit zwei oder mehr reaktionsfähigen Isocyanatgruppen pro Molekül,
(C) 0—50 Gewichtsprozent, bezogen auf das Gesamtgewicht von (A), (B), (C) und (D), eines hydroxyfunktionellen Zusatzstoffes mit einem zahlenmittleren Molekulargewicht ($\overline{M}_n$) zwischen etwa 150 und etwa 6000 und
(D) Lösungsmittel,
wobei dieses Polyisocyanatvernetzungsmittel in besagter Zusammensetzung in einer solchen Menge

## EP 0 092 624 B1

eingesetzt wird, daß jeweils 0,50 bis 1,6 reaktionsfähige Isocyanatgruppen auf ein Äquivalent in dieser Zusammensetzung entweder als Hydroxylgruppe auf jenem modifizierten Hydroxyacrylcopolymerisat oder als Hydroxylgruppe auf jenem hydroxyfunktionellen Zusatzstoff vorliegende Hydroxyfunktionalität kommen.

15. Beschichtungszusammensetzung nach Anspruch 14, worin dieses Polyisocyanatvernetzungsmittel in besagter Zusammensetzung in einer solcher Menge eingesetzt wird, daß 0,8 bis 1,3 reaktionsfähige Isocyanatgruppen auf eine Hydroxylgruppe in dieser Zusammensetzung kommen.

16. Beschichtungszusammensetzung nach Anspruch 14 oder 15, worin dieses Polyisocyanatvernetzungsmittel ein Diisocyanat ist.

17. Beschichtungszusammensetzung nach Anspruch 14 oder 15, worin dieses Polyisocyanatvernetzungsmittel 3 oder mehr reaktionsfähige Isocyanatgruppen pro Molekül aufweist.

18. Beschichtungszusammensetzung nach Anspruch 17, worin dieses Polyisocyanatvernetzungsmittel ein trimerisiertes Produkt eines aliphatischen Diisocyanats ist.

19. Beschichtungszusammensetzung nach Anspruch 18, worin dieses Polyisocyanatvernetzungsmittel ein trimerisiertes Reaktionsprodukt von 1,6-Hexamethylendiisocyanat ist.

20. Beschichtungszusammensetzung nach Anspruch 14 oder 15, worin dieses Polyisocyanatvernetzungsmittel ein Polyisocyanat mit Biuretstruktur ist.

21. Beschichtungszusammensetzung nach einem der Ansprüche 12 bis 20, worin besagter hydroxyfunktioneller Zusatzstoff ein aus der (i) hydroxyfunktionelle Polyester, (ii) hydroxyfunktionelle Polyäther, (iii) hydroxyfunktionelle Oligoester, (iv) monomere Polyole, (v) aus monoäthylenisch ungesättigten Monomeren, von denen eines oder mehrere eine Hydroxyfunktionalität aufweisen und die in diesem Copolymerisat in Mengen im Bereich von 10 bis 50 Gewichtsprozent dieses Copolymerisats eingesetzt werden, gebildete hydroxyfunktionelle Copolymerisate und (vi) Gemische aus (i)—(v) umfassenden Gruppe ausgewähltes Polyol ist.

22. Beschichtungszusammensetzung nach einem der Ansprüche 12 bis 21, welche ferner bis zu 15 Gewichtsprozent, bezogen auf das Gesamtgewicht der Zusammensetzung des Verlaufmittels enthält.

23. Beschichtungszusammensetzung nach einem der Ansprüche 12 bis 22, worin jenes Dicarbonsäureanhydrid aus Methylhexahydrophthalsäureanhydrid und jenes monoepoxidfunktionelle Monomer aus einem $C_2$—$C_{10}$-monoepoxidfuntionellen Monomeren besteht.

24. Beschichtungszusammensetzung nach einem der Ansprüche 12 bis 23, das mindestens 60 Gewichtsprozent nichtflüchtige Feststoffe enthält.

**Revendications**

1. Copolymère acrylique formé par le produit de réactions successives entre:

(i) un copolymère portant des groupes hydroxy latéraux et ayant un poids moléculaire moyen en nombre ($\overline{M}_n$) de 1000 à 5000, ce copolymère étant préparé à partir (a) de 5 à 40% en poids d'un ester hydroxy alkylique à insaturation monoéthylénique, de formule $CH_2=CR_1$—$COOR_2$ dans laquelle $R_1$ représente H ou un groupe alkyle, et $R_2$ représente un groupe hydroxy-alkyle, et (b) de 95 à 60% en poids d'autres monomères à insaturation monoéthylénique;

(ii) un anhydride d'acide dicarboxylique, comprenant au moins 50% en poids d'un anhydride alkyl-hexahydrophtalique, en faisant réagir les composés (i) et (ii) selon une quantité suffisant pour estérifier de 30 à 100% desdits groupes hydroxy latéraux du copolymère de façon à former des groupes carboxy latéraux; et

(iii) un monomère à fonction monoépoxide, comprenant au moins 90% en poids, de monomères à fonction monoépoxyde en $C_2$—$C_{10}$, en faisant réagir ce monomère avec les groupes carboxy latéraux du produit de réaction polymère des composés (i) et (ii), de façon à procurer au moins 1,0 équivalent de groupes époxy par équivalent des groupes carboxy latéraux et former des groupes hydroxy latéraux;

2. Copolymère selon la revendication 1, dans lequel l'ester hydroxy-alkylique à insaturation monoéthylénique, comprend un ou plusieurs acrylates d'hydroxy alkyle en $C_5$—$C_7$, un ou plusieurs méthacrylates d'hydroxy-alkyle en $C_6$—$C_8$, ou un mélange de ceux-ci.

3. Copolymère selon la revendication 1 ou la revendication 2, dans lequel ledit autre monomère à insaturation monoéthylénique, comprend un acrylate ou un autre monomère vinylique, ou un mélange de ces acrylates et d'autres monomères vinyliques.

4. Copolymère selon l'une quelconque des revendications 1 à 3, dans lequel le groupe alkyle de l'anhydride alkyl-hexahydrophtalique, comprend un groupe alkyle inférieur comportant jusqu'à 7 atomes de carbone.

5. Copolymère selon l'une quelconque des revendications 1 à 4, dans lequel l'anydride d'acide dicarbcxylique, comprend au moins 80% en poids d'un anhydride alkyl-hexahydrophtalique.

6. Copolymère selon la revendication 4 ou la revendication 5, dans lequel l'anhydride alkylhexahydrophtalique, est l'anhydride méthylhexahydrophtalique.

7. Copolymère selon l'une quelconque des revendications 1 à 6, dans lequel jusqu'à 50% en poids de l'anhydride d'acide dicarboxylique utilisé dans la préparation du copolymère, comprennent de l'anhydride hexahydrophtalique, de l'anhydride 2-dodécène-1-ylsuccinique, de l'anhydride tétrahydrophtalique, de l'anhydride méthyltétrahydrophtalique, un anhydride dérivé du camphre, ou un mélange de ceux-ci.

15

8. Copolymère selon l'une quelconque des revendications 1 à 7, dans lequel le monomère à fonction monoépoxyde en $C_2$—$C_{10}$, comprend de l'oxyde d'éthylène, de l'oxyde de propylène, de l'épichlorhydrine, du glycidol, du 1,2-époxy-butane, du 1,2-époxy-1-butène, du 1,2-époxyéthyl-benzène, du 1,2-époxy-3-phénoxy-propane, ou un mélange de ceux-ci.

9. Copolymère selon la revendication 8, dans lequel le monomère à fonction monoépoxyde en $C_2$—$C_{10}$, est un monomère en $C_3$—$C_7$.

10. Copolymère selon la revendication 9, dans lequel le monomère en $C_3$—$C_7$, comporte une fonction époxyde terminale.

11. Copolymère selon l'une quelconque des revendications 1 à 10, dans lequel le monomère à fonction monoépoxyde autre que le monomère dérivé de monoépoxyde en $C_2$—$C_{10}$, comprend un ester d'acide gras époxydé, du 2,3-époxy tétra-propyl éther octylique, du 1,2-époxy 3,3,3-trichloropropane, du 1,2-époxytétra-décane, du 1,2-époxycyclodécane, de l'exo-2,3-époxynorbornane, du 1,4-époxycyclohexane, du 1,2-époxy-3-fluoropropane, ou un mélange de ceux-ci.

12. Composition de revêtement, comprenant:

(A) un copolymère acrylique selon l'une quelconque des revendications 1 à 11;

(B) un agent de réticulation dérivé d'amine et d'aldéhyde;

(C) de 0 à 50% en poids par rapport au poids total des composants (A), (B), (C) et (D), d'un additif à fonction hydroxy ayant un poids moléculaire moyen en nombre ($\overline{M}_n$) de 150 à 6000; et

(D) un solvant

cet agent de réticulation dérivé d'amine et d'aldéhyde étant incorporé dans ladite composition selon une quantité suffisante pour procurer au moins 0,60 équivalent de fonctions réticulantes azotées pour chaque équivalent de fonctions hydroxy incorporées dans cette composition sous la forme d'un groupe hydroxy présent dans le copolymère acrylique modifié à groupes hydroxy, ou d'un groupe hydroxy présent dans l'additif à fonction hydroxy.

13. Composition de revêtement selon la revendication 12, dans lequel l'agent de réticulation dérivé d'amine et d'aldéhyde, comprend un produit de condensation du formaldéhyde avec la mélamine, une mélamine substituée, l'urée, la benzoguanamine ou une benzoguanamine substituée, ou un mélange de ces produits de condensation, et il est incorporé selon une quantité suffisante pour procurer de 0,75 à 3,75 équivalents de fonctions réticulantes azotée pour chaque équivalent de fonctions hydroxy incorporées dans cette composition sous la forme d'un groupe hydroxy présent dans le copolymère acrylique modifié à groupes hydroxy, ou d'un groupe hydroxy présent dans l'additif à fonction hydroxy.

14. Composition de revêtement, comprenant:

(A) un copolymère acrylique selon l'une quelconque des revendications 1 à 11;

(B) un agent de réticulation à base de polyisocyanate, comportant au moins deux groupes isocyanates réactifs par molécule;

(C) de 0 à 50% en poids par rapport au poids total des composants (A), (B), (C) et (D), d'un additif à fonction hydroxy ayant un poids moléculaire moyen en nombre ($\overline{M}_n$) de 150 à environ 6000; et

(D) un solvant

cet agent de réticulation à base de polyisocyanate étant incorporé dans la composition selon une quantité suffisante pour procurer de 0,50 à 1,6 groupes isocyanates réactifs pour chaque équivalent de fonctions hydroxy incorporées dans ladite composition sous la forme d'un groupe hydroxy présent dans le copolymère acrylique modifié à groupes hydroxy, sous la forme d'un groupe hydroxy présent dans l'additif à fonction hydroxy.

15. Composition de revêtement selon la revendication 14, dans laquelle l'agent de réticulation à base de polyisocyanate, est incorporé dans la composition selon une quantité suffisante pour procurer de 0,8 à 1,3 groupés isocyanates réactifs par groupe hydroxy présent dans la composition.

16. Composition de revêtement selon la revendication 14 ou la revendication 15, dans laquelle l'agent de réticulation à base de polyisocyanate, est un diisocyanate.

17. Composition de revêtement selon la revendication 14 ou la revendication 15, dans laquelle l'agent de réticulation à base de polyisocyanate, comporte au moins trois groupes isocyanate réactifs par molécule.

18. Composition de revêtement selon la revendication 17, dans laquelle l'agent de réticulation à base de polyisocyanate, est un produit trimérisé d'un diisocyanate aliphatique.

19. Composition de revêtement selon la revendication 18, dans laquelle l'agent de réticulation à base de polyisocyanate, est un produit de réaction trimérisé, du diisocyanate de 1,6-hexaméthylène.

20. Composition de revêtement selon la revendication 14 ou la revendication 15, dans laquelle l'agent de réticulation à base de polyisocyanate, est un polyisocyanate ayant une structure de biuret.

21. Composition de revêtement selon l'une quelconque des revendications 12 à 20, dans laquelle l'additif à fonction hydroxy, est un polyol choisi parmi: (i) les polyesters à fonction hydroxy, (ii) les polyéthers à fonction hydroxy, (iii) les oligoesters à fonction hydroxy, (iv) les polyols monomères, (v) les copolymères à fonction hydroxy formés à partir de monomères à insaturation monoéthylénique dont au moins un est à fonction hydroxy et est incorporé dans le copolymère selon des quantités allant de 10 à 50% en poids par rapport au copolymère, et (vi) les mélanges des composés (i) à (v).

22. Composition de revêtement selon l'une quelconque des revendications 12 à 21, comprenant en outre jusqu'à 15% en poids par rapport au poids total de la composition, d'un additif régulateur d'écoulement.

23. Composition de revêtement selon l'une quelconque des revendications 12 à 22, dans laquelle l'anhydride d'acide dicarboxylique, consiste en anhydride méthyl-hexahydrophtalique, et dans laquelle le monomère à fonction monoépoxyde, consiste en un monomère à fonction monoépoxyde en $C_2$—$C_{10}$.

24. Composition de revêtement selon l'une quelconque des revendications 12 à 23, contenant au moins 60% en poids de solides non-volatils.